# EUROPEAN PATENT APPLICATION

(11) **EP 1 149 621 A1**
(43) Date of publication of application: **31.10.2001**
(21) Application number: 01109873.8
(22) Date of filing: 23.04.2001
(51) Int. Cl.: B01D 53/04, B01J 20/06, B01J 20/34

(54) **Gas adsorbent and using method thereof**

(30) Priority: 24.04.2000 JP 2000121963
(71) Applicant: NITTO DENKO CORPORATION, Osaka (JP)
(72) Inventor: Takaoka, Seiichi, Ibaraki-shi, Osaka (JP); Hiyori, Takayuki, Ibaraki-shi, Osaka (JP)
(74) Representative: Grünecker, Kinkeldey, Stockmair & Schwanhäusser Anwaltssozietät

(57) **Abstract**

Described are a gas adsorbent which comprises anatase titanium oxide as an adsorbent, preferably, the gas adsorbent obtained by sintering anatase titanium oxide together with fluoro-carbon resin particles, and having an adsorption layer containing 20 wt.% or greater of anatase titanium oxide; and a using method of the gas adsorbent. The gas adsorbent according to the invention has adsorption performance of an odorous substance, can be regenerated in a simple manner and permits decomposition of the adsorbed ingredient upon regeneration.

## Description

### FIELD OF THE INVENTION

### 1. Field of the Invention

The present invention relates to a gas adsorbent containing as an adsorbent a specific photocatalyst and a using method of this gas adsorbent. More specifically, the invention relates to a gas adsorbent which is usable again by decomposing and removing therefrom the component, which has been adsorbed to the adsorbent, through exposure to light or heating and a using method of the gas adsorbent.

### 2. Description of the Related Art

As an adsorption sheet used for an air cleaner, treatment unit for polluted water or water purifier, conventionally known are that obtained by bonding and retaining an adsorbent such as activated charcoal or zeolite on the surface or inside of a sheet and that obtained by processing a fibrous adsorbent into a sheet. More specifically, an adsorption sheet obtained by processing fibrous activated charcoal into a felt or paper form, that obtained by electrically filling fibrous activated charcoal in a urethane foam and that formed as a complex of activated charcoal with spun bonded nonwoven sheet are known ("JAPAN NONWOVENS REPORT", pp.10-16, published on November 10, 1999).

The above-described adsorption sheets are however accompanied with the problem that when the sheets continue to adsorb an odorous substance or harmful substance from the air or water, their adsorption capacity inevitably becomes saturated within a predetermined term and exchange or disposal at predetermined intervals must be required. The adsorbent can be regenerated after desorption of the components adsorbed thereto, but for heightening the regeneration efficiency, heating at high temperatures are necessary, which poses problems in cost and durability. In addition, even if an odorous substance or harmful substance is desorbed from the adsorbent, it must be decomposed by another equipment.

### SUMMARY OF THE INVENTION

An object of the present invention is therefore to provide a gas adsorbent which has adsorbing performance of an odorous substance, can be regenerated by a simple manner and permits decomposition of adsorbed ingredients upon regeneration; and a using method thereof.

### SUMMARY OF THE INVENTION

The present inventors have carried out an extensive investigation to attain the above-described object. As a result, it has been found that use of anatase titanium oxide as an adsorbent makes it possible to attain the above-described object, leading to the completion of the invention.

In one aspect of the invention, there is thus provided a gas adsorbent comprising anatase titanium oxide as a principal adsorbent.

The above-described gas adsorbent is preferred to be obtained by sintering anatase titanium oxide together with fluoro-carbon resin particles and have an adsorption layer containing 20 to 80 wt.% of anatase titanium oxide.

The above-described gas adsorbent is preferred to have the adsorption layer formed on the surface of a heat-resistible base material sheet or formed into a sheet, each in an amount of 20 g/m² or greater.

The above-described gas adsorbent is preferred to be used after regeneration by decomposing and removing therefrom the component, which has been adsorbed to the gas adsorbent, through exposure to light or heating.

In another aspect of the invention, there is also provided a using method of any one of the above-described gas adsorbents, which comprises adsorbing a gas to the gas adsorbent, subjecting the resulting gas adsorbent to exposure to a sun light or UV lamp, thereby decomposing and removing the adsorbed ingredient, and using the thus-regenerated gas adsorbent for adsorption again.

Alternatively, the method comprises adsorbing a gas to the gas adsorbent, heating the gas adsorbent at 200 to 300°C, thereby decomposing and removing therefrom the adsorbed ingredient, and using the thus-regenerated gas adsorbent for adsorption again.

A gas adsorbent according to the invention enables, as shown in the results of Examples which will be described later, adsorption of an odorous substance such as aldehyde on a practical level owing to anatase titanium oxide acting as an adsorbent. In addition, owing to effects of anatase titanium oxide as a photocatalyst or decomposition catalyst, the adsorbent can be regenerated after decomposition and removal of the adsorbed ingredient by a simple treatment such as exposure to light or heating. As a result, the adsorbent of the invention has adsorbing performance of an odorous substance, can be regenerated by a simple manner and permits decomposition of the adsorbed ingredient upon regeneration. Accordingly, the adsorbent, which must otherwise be exchanged or disposed at predetermined intervals after adsorption capacity is saturated, can be used in repetition and its life can be extended, making it possible to save the cost spent for exchange.

When the gas adsorbent of the invention is obtained by sintering anatase titanium oxide together with fluoro-carbon resin particles and its adsorption layer contains 20 to 80 wt.% of anatase titanium oxide, adsorption and catalyst properties of it can be exhibited efficiently because anatase titanium oxide is suitably retained in the sintered fluoro-carbon resin particles and its content is appropriate.

When the gas adsorbent of the invention has the adsorption layer formed on the surface of a heat-resistible base material sheet or formed into a sheet, each in an amount of 20 g/m² or greater, it can be handled more readily because the gas adsorbent in the form of a sheet is able to have an increased effective contact area with a component to be adsorbed, and adsorption and catalyst properties of it can be improved further because the formation amount of the adsorption layer is appropriate.

The gas adsorbent of the invention has effects and advantages as described above so that it is preferred to be used again after regenerated by decomposition and removal of the adsorbed ingredient by exposure to light or by heating.

Since the using method of the gas adsorbent according to the invention employs the gas adsorbent of the invention having the above-described effects and advantages, the gas adsorbent can be regenerated in a simple manner by subjecting it to exposure to a sun light or UV lamp after adsorption of an odorous substance, thereby decomposing and removing the adsorbed ingredient. In addition, in this method, the adsorbed ingredient can be decomposed upon regeneration.

Similar effects and advantages are also available from another using method of the invention wherein the adsorbent is regenerated by decomposing and removing the adsorbed ingredient by heating at 200 to 300°C.

### BRIEF DESCRIPTION OF THE DRAWINGS

FIG. 1 is a schematic view illustrating an apparatus used for evaluation of adsorption performance in Examples and Comparative Examples.
FIG. 2 is a cross-sectional view illustrating the evaluation unit of the apparatus shown in FIG. 1.
FIG. 3 is a graph showing the results of adsorption and photocatalyst properties in Example 11.

### DETAILED DESCRIPTION OF THE INVENTION

The gas adsorbent of the invention contains anatase titanium oxide as an adsorbent. From the viewpoints of adsorption and catalyst properties, anatase titanium oxide in the form of powders having an average particle size of 0.2 to 5.0 µm is preferred. Examples of anatase titanium oxide powders include commercially available products such as "ST-01" (trade name; product of Ishihara Sangyo Co., Ltd.), an aqueous dispersion of anatase titanium oxide powders "NTI-4" (trade name; product of Resino Color Industry Co., Ltd.) and an aqueous dispersion of anatase titanium oxide powders "AC-10" (trade name; product of Dainichiseika Color & Chemicals Mfg. Co., Ltd.).

Anatase titanium oxide can be held, similar to particulate activated charcoal or zeolite particles, directly or through a binder on a support ordinarily employed for a conventional adsorbent, but it is preferred to sinter anatase titanium oxide together with fluoro-carbon resin particles to form an adsorption layer. The adsorption layer thus formed preferably contains 20 to 80 wt.%, more preferably 30 to 60 wt.% of anatase titanium oxide. The content of anatase titanium oxide influences on the adsorption amount of an odorous substance or harmful substance. When the content is less than 20 wt.%, the adsorption performance tends to be insufficient, while the content exceeding 80 wt.% tend to cause a marked deterioration in the mechanical strength.

The adsorption layer as described above can be formed suitably by applying a dispersion of fluoro-carbon resin particles and photocatalyst particles of titanium oxide to a base material, followed by sintering. Preferred examples of fluoro-carbon resin particles include polytetrafluoroethylene (PTFE) powders, polytetrafluoroethylene·perfluoroalkylvinyl ether copolymer (PFA) powders and polytetrafluoroethylene·hexafluoropropylene copolymer (FEP) powders. The above-described dispersion can be prepared by dispersing photocatalyst particles in a dispersion of the fluoro-carbon resin. As a dispersion of the polytetrafluoroethylene powders, commercially available products such as "XAD936" and "XAD639" (each trade name; product of Asahi Glass Fluoropolymers Co., Ltd.) can be used. As a dispersion of the polytetrafluoroethylene·perfluoroalkylvinyl ether copolymer powders, commercially available products such as "AD2CR" (trade name; product of Daikin Industries, Ltd.) are usable. As a dispersion of the polytetrafluoroethylene·hexapropylene copolymer powders, commercially available products such as "ND-1" (trade name; product of Daikin Industries, Ltd.) are usable.

The gas adsorbent of the invention is preferably in the form of a sheet and such a gas adsorbent can be obtained by forming the above-described absorption layer on the surface of a heat-resistible base material sheet or forming the adsorption layer into a sheet. The adsorption layer may be formed on the surface of a heat-resistible base material by application of the above-exemplified dispersion onto the surface of the heat-resistible base material, followed by sintering, while the adsorption layer may be formed into a sheet by formation of the adsorption layer on the releasable surface of a heat-resistible base material sheet, followed by peeling. The formation amount of the adsorption layer at this time is preferably at least 20 g/m², with 40 to 80 g/m² being more preferred. Amounts less than 20 g/m² tend to lower the adsorption performance.

Examples of the heat-resistible base material usable in the invention include metal foils (ex. aluminum foil and SUS foil), metal mesh (ex. SUS mesh), glass fiber cloth, glass fiber mesh, heat-resistible plastic films (ex. polyimide film and polytetrafluoroethylene film), heat plastic clothes (ex. polyimide cloth and polytetrafluoroethylene cloth) and heat-resistible plastic mesh (ex. polyimide mesh), each having heat resistance of 300°C or greater.

The gas adsorbent of the invention is preferably used again after regenerated by decomposition and removal of the adsorbed ingredient therefrom through exposure to light or heating. More specifically, the adsorbent which has been used for adsorption is employed again for adsorption after decomposition and removal therefrom of the adsorbed ingredient by exposure to a sun light or to UV lamp. Alternatively, the adsorbent which has been used for adsorption is employed again for adsorption after decomposition and removal therefrom of the adsorbed ingredient by heating at 200 to 300°C.

Adsorption using the gas adsorbent of the invention can be carried out under similar conditions to that using a commercially available adsorption sheet and at this time, an adsorption property equal to that of the activated charcoal type adsorbent can be obtained. Examples of the gas to be adsorbed include acid gases such as acetaldehyde and formaldehyde, neutral gases such as toluene and xylene and basic gases such as ammonia. The gas adsorbent of the invention is also effective for the adsorption of gases of a low concentration not greater than 200 ppm.

Exposure to light is conducted in a similar manner and under similar conditions to the case where a photocatalyst is employed. Any one of the above-exemplified gases can be decomposed through oxidation or the like by the gas adsorbent of the invention. Heating is preferably conducted for several hours at 200 to 300°C. At temperatures less than 200°C, a decomposition rate is not sufficient, while those exceeding 300°C tend to cause a marked thermal deterioration of the fluoro-carbon resin.

Regeneration of the gas adsorbent by decomposition and removal therefrom of the adsorbed ingredient can be repeated at least 100 times without lowering its adsorption property by 10% or greater. Thus, the adsorbent of the invention has a long life.

### EXAMPLES

A description will next be made of Examples wherein the constitution and advantages of the invention are shown specifically.

### (Example 1)

First, a glass fiber mesh ("KS5241", trade name; product of KAMEBO, LTD.) having a mesh number of 16 was cut into a piece of 300 mm x 450 mm, whereby a glass fiber mesh base material for hand coating was formed.

In the next place, a coating solution having a base concentration of 40 wt.% was obtained by mixing a PTFE dispersed solution ("XAD936", trade name; product of Asahi Glass Fluoropolymers Co., Ltd., having a base concentration of 60 wt.%), titanium oxide ("ST-01", trade name; product of Ishihara Sangyo Co., Ltd., average particle size: 3.3 µm) and distilled water to give a PTFE:titanium oxide composition ratio (weight ratio) of 9:1, followed by stirring. The whole surface of the above-described glass fiber mesh base material was dipped in the resulting coating solution. The glass fiber mesh base material thus dipped was pulled up and the surface was die coated by two wire bars (#3) to have a uniform thickness (coating buildup: 40 g/m^{z}). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PTFE dispersed solution and the sizing agent of the glass fiber mesh base material, whereby a mesh-like adsorption sheet was obtained. Adsorption and photocatalyst properties of the sheet thus obtained were evaluated in accordance with the below-described evaluation procedure of an adsorption property.

### [Evaluation procedure of an adsorption property]

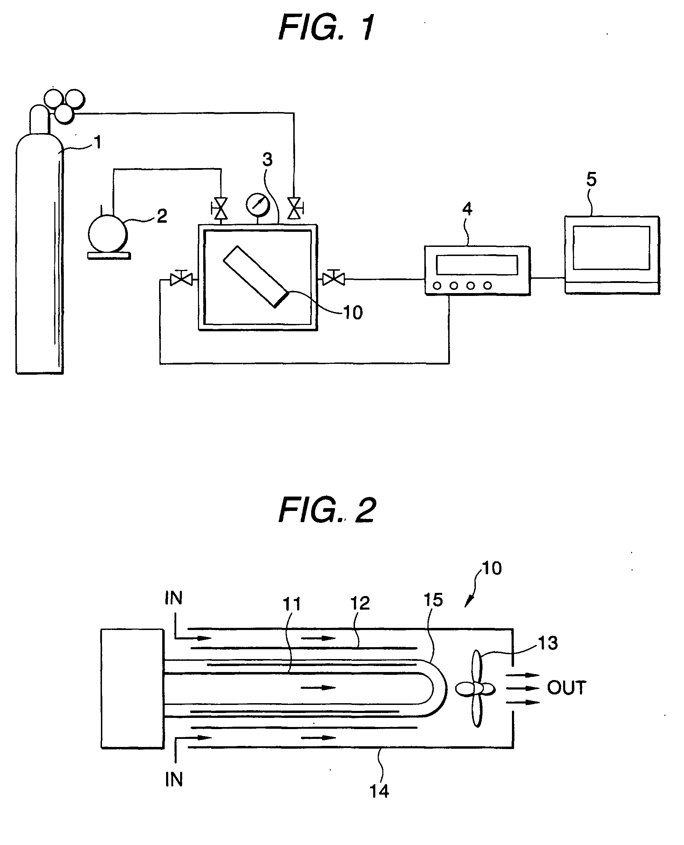

The mesh-like adsorption sheet was cut into a sample piece of 110 mm × 165 mm. It was allowed to stand for 1 hour under a sun light to initialize the sample. As illustrated in FIG. 2, the sample 12 was wound round a cold cathode lamp 15 of an evaluation unit 10 once, fixed by a stapler and covered around with a SUS case 14 (40 mmØ × 170 mm). As illustrated in FIG. 1, the evaluation unit was then connected with a DC cable in a vacuum desiccator 3 and inserted in this 8-liter vacuum desiccator 3. After a vacuum pump 2 was connected with the vacuum desiccator 3, pressure reduction was continued even to a gauge pressure of 700 to 750 mmHg.

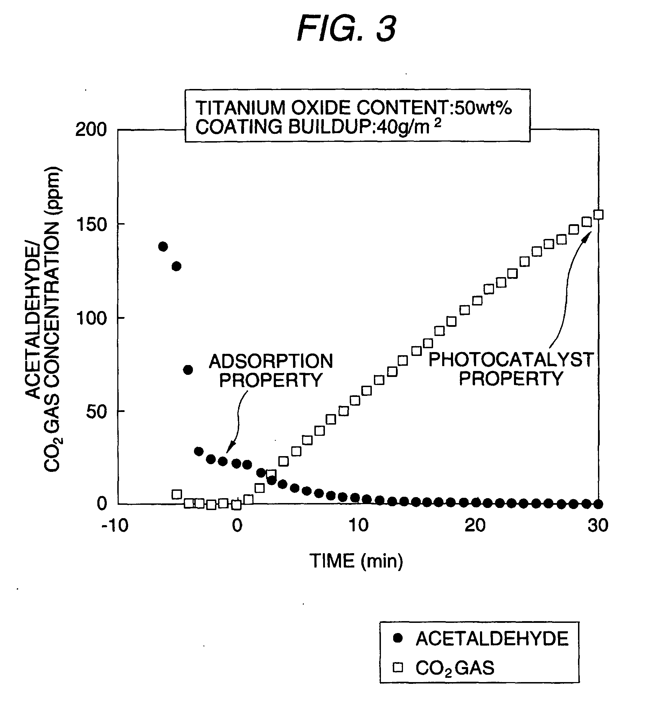

The vacuum desiccator 3 was then filled to be a normal pressure with a standard gas from a bomb 1 of a nitrogengas-base acetaldehyde standard gas (140 ppm) produced by Nippon Sanso Corporation. A decline of the concentration of acetaldehyde was monitored by a photo acoustic gas monitor 4 by moving only an blower 13 and a difference between the acetaldehyde concentration at the time when the adsorption amount reached equilibrium and 140 ppm, that is, the initial concentration was determined as an adsorption amount (refer to FIG. 3). When the adsorption amount of acetaldehyde reached equilibrium, a UV lamp 11 of the evaluation unit 10 was turned on and effects of a photocatalyst were found from the production amount of a carbon dioxide gas 30 minutes after exposure to UV rays (refer to FIG. 3). The measuring results at that time were output by a portable personal computer (the results of Example 11 were shown in FIG. 3). The blower 13 at that time was in operation.

### (Examples 2 to 6)

In each of Examples 2 to 6, in a similar manner to Example 1 except for the change of a composition ratio (weight ratio) of the coating solution, a mesh-like adsorption sheet was prepared and its adsorption and photocatalyst properties were evaluated.

The above-described results are shown in Table 1.

**Table 1**

| | Ex. 1 | Ex. 2 | Ex. 3 | Ex. 4 | Ex. 5 | Ex. 6 |
|---|---|---|---|---|---|---|
| Amount of titanium oxide having an average particle size of 3.3 µm (wt.%) | 10 | 20 | 30 | 40 | 50 | 60 |
| Amount of PTFE powders (wt.%) | 90 | 80 | 70 | 60 | 50 | 40 |
| Kind of base material | Glass mesh, 16 mesh | Glass mesh, 16 mesh | Glass mesh, 16 mesh | Glass mash, 16 mesh | Glass mesh, 16 mesh | Glass mesh, 16 mesh |
| Coating buildup (g/m²) | 40 | 40 | 40 | 40 | 40 | 40 |
| Adsorption amount of acetaldehyde (ppm) | 7.4 | 31.2 | 54.2 | 75.0 | 80.1 | 77.7 |
| Amount of CO₂ after exposure to UV rays for 30 minutes (ppm) | 64.7 | 102.2 | 114.8 | 146.3 | 147.4 | 142.2 |

From the results of Table 1, it has been found that the adsorption sheet obtained in any one of the above-described Examples permits adsorption of aldehyde and decomposition of it by UV rays and that the adsorption amount of the adsorption sheet showed a drastic increase by incorporating therein titanium oxide in an amount of at least 20 wt.%. (Example 7)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTFE:titanium oxide composition ratio (weight ratio) of 9:1, followed by stirring. The whole surface of the above-described glass fiber mesh base material was dipped in the resulting coating solution. The glass fiber mesh base material thus dipped was pulled up and the surface was die coated by two wire bars (#3) to have a uniform film thickness (coating buildup: 40 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PTFE dispersed solution and the sizing agent of the glass fiber mesh base material, whereby a mesh-like adsorption sheet was obtained. Adsorption and photocatalyst properties of the sheet thus obtained were evaluated as described above.

### (Examples 8 to 12)

In each of Examples 8 to 12, in a similar manner to Example 7 except for the change of a composition ratio (weight ratio) of the coating solution, a mesh-like adsorption sheet was prepared and its adsorption and photocatalyst properties were evaluated.

The above-described results are shown in Table 2.

**Table 2**

| | Ex. 7 | Ex. 8 | Ex. 9 | Ex. 10 | Ex. 11 | Ex. 12 |
|---|---|---|---|---|---|---|
| Amount of titanium oxide having an average particle size of 0.3 µm (wt.%) | 10 | 20 | 30 | 40 | 50 | 60 |
| Amount of PTFE powders (wt.%) | 90 | 80 | 70 | 60 | 50 | 40 |
| Kind of base material | Glass mesh, 16 mesh | Glass mesh, 16 mesh | Glass mesh, 16 mesh | Glass mesh, 16 mesh | Glass mesh, 16 mesh | Glass mesh, 16 mesh |
| Coaling buildup (g/m²) | 40 | 40 | 40 | 40 | 40 | 40 |
| Adsorption amount of acetaldehyde (ppm) | 19.4 | 56.6 | 96.4 | 108.7 | 116.3 | 125.6 |
| Amounl of CO₂ after exposure to UV rays for 30 minutes (ppm) | 65.0 | 148.7 | 146.9 | 149.3 | 156.0 | 141.7 |

From the results of Table 2, it has been found that the adsorption sheet obtained in any one of Examples 7 to 12 permits adsorption of aldehyde and decomposition of it by UV rays and the adsorption amount of the adsorption sheet showed a drastic increase by incorporating therein titanium oxide in an amount of at least 20 wt.%.

### (Example 13)

First, a glass fiber cloth ("K48K104", trade name; product of Arisawa Seisakujo) having a thickness of 50 µm was cut into a piece of 300 mm x 450 mm, whereby a glass fiber cloth base material for hand coating was formed.

In the next place, a coating solution having a base concentration of 35 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTFE:titanium oxide composition ratio (weight ratio) of 6:4, followed by stirring. The whole surface of the above-described glass fiber cloth base material was dipped in the resulting coating solution. The glass fiber cloth base material thus dipped was pulled up and the surface was dip coated by two wire bars (#3) to have a uniform film thickness (coating buildup: 40 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PTFE dispersed solution and the sizing agent of the glass fiber cloth base material, whereby an adsorption sheet composed of a glass fiber cloth base material was obtained. Adsorption and photocatalyst properties of the sheet thus obtained were evaluated as described above.

### (Example 14)

In a similar manner to Example 13 except for the use of an aluminum foil base material for hand coating obtained by cutting a 50 µm thick aluminum foil ("Aluminum 1N30", trade name; product of Toyo Aluminum K.K.) into a piece of 300 mm x 450 mm, an adsorption sheet composed of an aluminum base material was produced and its adsorption and photocatalyst properties were evaluated.

### (Example 15)

In a similar manner to Example 13 except for the use of a polyimide film base material for hand coating obtained by cutting a 50 µm thick polyimide film ("KAPTON 100H", trade name; product of Du Pont-Toray Co., Ltd.) into a piece of 300 mm x 450 mm, an adsorption sheet composed of a polyimide film base material was produced and its adsorption and photocatalyst properties were evaluated.

### (Example 16)

In a similar manner to Example 13 except for the use of a polytetrafluoroethylene film base material for hand coating obtained by cutting a 50 µm thick polytetrafluoroethylene film ("NITOFLON No. 900", trade name; product of NITTO DENKO CORPORATION) into a piece of 300 mm x 450 mm, an adsorption sheet composed of a polytetrafluoroethylene film base material was produced and its adsorption and photocatalyst properties were evaluated. (Example 17)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 30 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTFE:titanium oxide composition ratio (weight ratio) of 6:4, followed by stirring. The whole surface of the above-described glass fiber mesh base material was dipped in the resulting coating solution. The glass fiber mesh base material thus dipped was pulled up and the surface was die coated by two wire bars (#3) to have a uniform film thickness (coating buildup: 25 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PTFE dispersed solution and the sizing agent of the glass fiber mesh base material, whereby a mesh-like adsorption sheet was obtained. Adsorption and photocatalyst properties of the sheet thus obtained were evaluated as described above.

### (Example 18)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTEE:titanium oxide composition ratio (weight ratio) of 8:2, followed by stirring. The whole surface of the above-described glass fiber mesh base material was dipped in the resulting coating solution. The glass fiber mesh base material thus dipped was pulled up and the surface was die coated by two wire bars (#3) to have a uniform film thickness. The resulting base material was then subjected to preliminary drying (removal of water) at 120°C x 2 minutes and sintering at 390°C x 2 minutes. This coating procedure was repeated twice, whereby a sample having a coating buildup of 80 g/m² was obtained. By thermal treatment of the sample at 300°C x 20 hr, the surfactant in the PTFE dispersed solution and sizing agent of the glass fiber mesh base material were decomposed and removed, whereby a mesh-like adsorption sheet was obtained. Adsorption and photocatalyst properties of the sheet thus obtained were evaluated as described above.

The above-described results are shown in Table 3.

**Table 3**

| | Ex. 13 | Ex. 14 | Ex. 15 | Ex.16 | Ex. 17 | Ex. 18 |
|---|---|---|---|---|---|---|
| Amount of titanium oxide having an average particle size of 03 µm (wt.%) | 40 | 40 | 40 | 40 | 40 | 20 |
| Amount of PTFE powders (wt.%) | 60 | 60 | 60 | 60 | 60 | 80 |
| Kind of base material Kind of base material | Glass cloth (50 µm) | Aluminum foll (50 µm) | PT film (50 µm) | PTFE film (50 µm) | Glass mesh, 16 mesh | Glass mesh, 16 mesh |
| Coating buildup (g/m²) | 40 | 40 | 40 | 40 | 25 | 80 |
| Adsorption amount of acetaldehyde (ppm) | 108.6 | 101.1 | 97.9 | 104.9 | 88.9 | 97.1 |
| Amount of CO₂ after exposure to UV rays for 30 minutes (ppm) | 203.1 | 137.5 | 133.9 | 142.3 | 146.3 | 152.2 |

From the results of Table 3, it has been found that any one of the above-described base materials exhibited good results and with an increase in the formation amount (coating buildup) of an adsorption layer from 25 g/m², better results were available.

### (Example 19)

First, a silicone fluoride releasing agent was applied to a 50 µm thick aluminum foil ("Aluminum 1N30", trade name; product of Toyo Aluminum K.K.) at a coat weight of 0.05 to 0.5 g/m² and the resulting foil was cut into a piece of 300 mm x 450 mm, whereby a releasable aluminum-foil base material for hand coating was obtained.

In the next place, a coating solution having a base concentration of 30 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTFE:titanium oxide composition ratio (weight ratio) of 6:4, followed by stirring. The whole surface of the above-described releasable aluminum-foil base material was dipped in the resulting coating solution. The releasable base material thus dipped was pulled up and the surface was die coated by two wire bars (#3) to have a uniform film thickness (coating buildup: 25 g/m²). The resulting base material was then subjected to preliminary drying (drying of water) at 120°C x 2 minutes, sintering at 390°C x 2 minutes, and thermal treatment at 300°C x 20 hours in a drying oven to decompose and remove the surfactant in the PTFE dispersed solution.

Then, the coated film was peeled from the releasable aluminum-foil base material to yield a base-material-free adsorption sheet (coating buildup: 25 g/m²). Adsorption and photocatalyst properties of the sheet thus obtained were evaluated as described above.

### (Example 20)

First, a silicone fluoride releasing agent was applied to a 50 µm thick aluminum foil ("Aluminum 1N30", trade name; product of Toyo Aluminum K.K.) at a coat weight of 0.05 to 0.5 g/m² and the resulting foil was cut into a piece of 300 mm x 450 mm, whereby a releasable aluminum-foil base material for hand coating was obtained.

In the next place, a coating solution having a base concentration of 30 wt.% was obtained by mixing a PTFE dispersed solution ("XAD936", trade name; product of Asahi Glass Fluoropolymers Co., Ltd., having a base concentration of 60 wt.%), titanium oxide ("NTI-4", trade name; product of Resino Color Industry Co., Ltd., average particle size: 0.3 µm) and distilled water to give a PTFE:titanium oxide composition ratio (weight ratio) of 8:2, followed by stirring. The whole surface of the above-described releasable aluminum-foil base material was dipped in the resulting coating solution. The releasable base material thus dipped was pulled up and the surface was die coated by two wire bars (#3) to have a uniform film thickness. The resulting base material was then subjected to preliminary drying (removal of water) at 120°C x 2 minutes and sintering at 390°C x 2 minutes. This coating procedure was repeated twice to obtain a sample having a coating buildup of 80 g/m². The sample was then thermally treated at 300°C for 20 hours to decompose and remove the surfactant in the PTFE dispersed solution.

Then, the coating film was peeled from the releasable aluminum-foil base material to yield a base-material-free adsorption sheet (coating buildup: 80 g/m²). Adsorption and photocatalyst properties of the sheet thus obtained were evaluated as described above.

### (Example 21)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing a PTFE dispersed solution ("XAD936", trade name; product of Asahi Glass Fluoropolymers Co., Ltd., having a base concentration of 60 wt.%), titanium oxide ("AC-10", trade name; product of Dainichiseika Color & Chemicals Mfg. Co., Ltd., average particle size: 1.5 µm) and distilled water to give a PTFE:titanium oxide composition ratio (weight ratio) of 8:2, followed by stirring. The whole surface of the above-described glass fiber mesh base material was dipped in the resulting coating solution. The glass fiber mesh base material thus dipped was pulled up and the surface was dice coated by two wire bars (#3) to have a uniform film thickness (coating buildup: 40 g/m²). The resulting base material was then subjected to preliminary drying (removal of water) at 120°C x 2 minutes, sintering at 390°C x 2 minutes and thermal treatment at 300°C x 20 hr to decompose and remove the surfactant in the PTFE dispersed solution and sizing agent of the glass fiber mesh base material, whereby a mesh-like adsorption sheet was obtained. Adsorption and photocatalyst properties of the sheet thus obtained were evaluated as described above.

### (Example 22)

In a similar manner to Example 21 except for the change of the composition ratio (weight ratio) of the coating solution, a mesh-like adsorption sheet was obtained and its adsorption and photocatalyst properties were evaluated. (Example 23)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing a PFA dispersed solution ("AD2CR", trade name; product of Daikin Industries, Ltd., having a base concentration of 60 wt.%), titanium oxide ("NTI-4", trade name; product of Resino Color Industry Co., Ltd., average particle size: 0.3 µm) and distilled water to give a PFA;titanium oxide composition ratio (weight ratio) of 6:4, followed by stirring. The whole surface of the above-described glass fiber mesh material was dipped in the resulting coating solution. The glass fiber mesh base material thus dipped was pulled up and its surface was die coated by two wire bars (#3) to have a uniform film thickness (coating buildup: 40 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PFA dispersed solution and sizing agent of the glass fiber mesh base material, whereby a mesh-like adsorption sheet was obtained. Adsorption and photocatalyst properties of the sheet thus obtained were evaluated as described above.

### (Example 24)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing an FEP dispersed solution ("ND-1", trade name; product of Daikin Industries, Ltd., having a base concentration of 60 wt.%), titanium oxide ("NTI-4", trade name; product of Resino Color Industry Co., Ltd., average particle size: 0.3 µm) and distilled water to give an FEP:titanium oxide composition ratio (weight ratio) of 6:4, followed by stirring. The whole surface of the glass fiber mesh base material was dipped in the resulting coating solution. The glass fiber mesh base material thus dipped was pulled up and the surface was die coated by two wire bars (#3) to have a uniform film thickness (coating buildup: 40 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the FEP dispersed solution and sizing agent of the glass fiber mesh base material, whereby a mesh-like adsorption sheet was obtained. Adsorption and photocatalyst properties of the sheet thus obtained were evaluated as described above.

The above-described results are shown in Table 4.

**Table 4**

| | Ex. 19 | Ex. 20 | Ex. 21 | Ex. 22 | Ex. 23 | Ex. 24 |
|---|---|---|---|---|---|---|
| Amount of titanium oxide having an average particle size of 0.3 µm (wt.%) | 40 | 20 | - | - | 40 | 40 |
| Amount of titanium oxide having an average particle size of 1.5 µm (wt.%) | - | - | 20 | 40 | - | - |
| Amount of PTFE powders (wt.%) | 60 | 80 | 80 | 60 | - | - |
| Amount of PFA powders (wt.%) | - | - | - | - | 60 | - |
| Amount of FEP powders (wt.%) | - | - | - | - | - | 60 |
| Kind of base material | - | - | Glass mesh, 16 mesh | Glass mesh, 16 mesh | Glass mesh 16 mesh | Glass mesh, 16 mesh |
| Coating buildup (g/m²) | 25 | 80 | 40 | 40 | 40 | 40 |
| Adsorption amount of acetaldehyde (ppm) | 97.7 | 102.4 | 54.1 | 103.9 | 94.9 | 97.6 |
| Amount of CO₂ after exposure to UV rays for 30 minutes (ppm) | 201.4 | 147.1 | 97.7 | 116.3 | 143.1 | 142.4 |

From the results of Table 4, it has been found that the base-material-free adsorption sheet or the adsorption sheet obtained using another resin also exhibited good results. (Example 25)

After evaluation of the adsorption property of the sample obtained in Example 10, it was exposed to a sun light for 1 hour and its adsorption property upon repeated use was evaluated by the above-described evaluation procedure of the adsorption property.

### (Example 26)

The operation of Example 25 was repeated 5 times and the adsorption property after 5-times repeated use was evaluated.

### (Example 27)

After evaluation of the adsorption property of the sample obtained in Example 11, the sample was thermally treated at 300°C for 2 hours. Then, the adsorption property upon repeated use was evaluated in accordance with the evaluation procedure as described above.

### (Example 28)

After repetition of the operations in Example 27 five times, the adsorption property after 5-times repeated use was evaluated.

The above-described results are shown in Table 5.

**Table 5**

| | Ex. 25 | Ex. 26 | Ex. 27 | Ex. 28 |
|---|---|---|---|---|
| Regeneration frequency by exposure to sun light (Sample of Ex. 10) | 1 | 5 | - | - |
| Regeneration frequency by heating (Sample of Example 11) | - | - | 1 | 5 |
| Adsorption amount of acetaldehyde (ppm) | 106.3 | 110.1 | 114.8 | 118.1 |
| Amount of CO₂ after exposure to UV rays for 30 min. (ppm) | 149.5 | 143.8 | 151.9 | 147.0 |

From the results of Table 5, it has been found that regeneration by exposure to light or by heating hardly caused a deterioration in the performance.

### (Comparative Example 1)

First, a glass fiber mesh ("KS5241", trade name; product of KANEBO, LTD.) having a mesh number of 16 was cut into a piece of 300 mm x 450 mm, whereby a glass fiber mesh base material for hand coating was formed.

In the next place, a coating solution having a base concentration of 35 wt.% was obtained by mixing a PTFE dispersed solution ("XAD936", trade name; product of Asahi Glass Fluoropolymers Co., Ltd., having a base concentration of 60 wt.%), zinc oxide ("NZN-4", trade name; product of Resino Color Industry Co., Ltd., average particle size: 0.3 µm) and distilled water to give a PTFE:zinc oxide composition ratio (weight ratio) of 8:2, followed by stirring. The whole surface of the above-described glass fiber mesh base material was dipped in the resulting coating solution. The glass fiber mesh base material thus dipped was pulled up and the surface was die coated by two wire bars (#3) to have a uniform film thickness (coating buildup: 40 g/m²). The resulting base material was then subjected to preliminary drying (removal of water) at 120°C x 2 minutes, sintering at 390°C x 2 minutes, and thermal treatment at 300°C x 20 hours in a drying oven to decompose and remove the surfactant in the PTFE dispersed solution and the sizing agent of the glass fiber mesh base material, whereby a mesh-like adsorption sheet was obtained. Adsorption and photocatalyst properties of the sheet thus obtained were evaluated as described above.

### (Comparative Example 2)

In a similar manner to Comparative Example 1 except for the change in the composition ratio (weight ratio) of the coating solution, a mesh-like adsorption sheet was obtained and adsorption and photocatalyst properties were evaluated.

The above-described results are shown in Table 6.

**Table 6**

| | Comp. Ex. 1 | Comp. Ex. 2 |
|---|---|---|
| Amount of zinc oxide having an average particle size of 0.3 µm (wt.%) | 20 | 40 |
| Amount of PTFE powders (wt.%) | 80 | 60 |
| Kind of base material | Glass mesh, 16 mesh | Glass mesh, 16 mesh |
| Coating buildup (g/m²) | 40 | 40 |
| Adsorption amount of acetaldehyde (ppm) | 6.1 | 7.3 |
| Amount of CO₂ after exposure to UV rays for 30 min. (ppm) | 19.5 | 23.8 |

From the results of Table 6, it has been found that the adsorption sheets using a photocatalyst other than titanium oxide hardly exhibited an adsorption property.

### (Comparative Example 3)

An adsorption property of a commercially available adsorption sheet A ("Semia V" (regular type), trade name; product of Asahi Chemical Industry Co., Ltd.), a composite material of activated charcoal and spun-bond nonwoven sheet was evaluated in accordance with the above-described evaluation method.

### (Comparative Example 4)

An adsorption property of a commercially available adsorption sheet B ("Semia V" (filter type), trade name; product of Asahi Chemical Industry Co., Ltd.), a composite material of activated charcoal and spun-bond nonwoven sheet was evaluated in accordance with the above-described evaluation method.

### (Comparative Example 5)

After evaluation of the adsorption property of the sample obtained in Comparative Example 3, its adsorption property was evaluated again in accordance with the above-described evaluation method.

### (Comparative Example 6)

After evaluation of the adsorption property of the sample obtained in Comparative Example 4, its adsorption property was evaluated again in accordance with the above-described evaluation method.

The above-described results are shown in Table 7.

**Table 7**

| | Comp. Ex. 3 | Comp. Ex. 4 | Comp. Ex. 5 | Comp.Ex. 6 |
|---|---|---|---|---|
| Commercially available adsorption sheet | A | B | Re-evaluation of A after used for adsorption | Re-evaluation of B after used for adsorption |
| Adsorption amount of acetaldehyde (ppm) | 94.3 | 125.3 | 10.7 | 3.9 |

As the results of Table 7, it has been found that the adsorption sheets of Examples each exhibited a similar level of adsorption to commercially available adsorption sheets. It has also been found that when similar evaluation tests were repeated, the adsorption capacity of the commercially available adsorption sheets became saturated and they hardly exhibited adsorption performance.

## Claims

1. A gas adsorbent comprising anatase titanium oxide as an adsorbent.

2. The gas adsorbent according to claim 1, which is obtained by sintering anatase titanium oxide together with fluoro-carbon resin particles and comprises an adsorption layer containing 20 to 80 wt.% of the anatase titanium oxide.

3. The gas adsorbent according to claim 1, which comprises one of an adsorption layer on a surface of a heat-resistible base material that is a sheet, and an adsorption layer that is a sheet, each of the adsorption layer is formed in an amount of 20 g/m² or greater.

4. The gas adsorbent according to claim 2, wherein the adsorption layer is formed on the surface of a heat-resistible base material sheet or the adsorption layer is formed into a sheet, each in an amount of 20 g/m² or greater.

5. The gas adsorbent according to claim 1, which is to be used again after regeneration by decomposing and removing an absorbed component, which is adsorbed to the gas adsorbent, upon one of light irradiation and heating.

6. The gas adsorbent according to claim 1, wherein the anatase titanium oxide has an average particle size of 0.2 to 5.0 µm.

7. A using method of a gas adsorbent, which comprises:
adsorbing an adsorbed ingredient to a gas adsorbent comprising anatase titanium oxide as an adsorbent;
subjecting the resulting gas adsorbent to exposure to one of a sun light an a UV lamp, so as to decompose and remove the adsorbed ingredient, and regenerate the gas adsorbent; and
using the thus-regenerated gas adsorbent for adsorption again.

8. A using method of a gas adsorbent, which comprises:
adsorbing an adsorbed ingredient to a gas adsorbent comprising anatase titanium oxide as an adsorbent;
heating the gas adsorbent at 200 to 300°C, so as to decompose and remove the adsorbed ingredient, and regenerate the gas adsorbent; and
using the thus-regenerated gas adsorbent for adsorption again.
